# EUROPÄISCHE PATENTANMELDUNG

(11) **EP 1 347 193 A1**
(43) Veröffentlichungstag der Anmeldung: **24.09.2003**
(21) Anmeldenummer: 02076067.4
(22) Anmeldetag: 21.03.2002
(51) Int. Cl.: F16D 41/24, F16D 41/18

(54) **Tretauto mit Freilaufkupplung**

(71) Anmelder: Van Ee, Teunis Karel, 3771 MB Barneveld (NL)
(72) Erfinder: Van Ee, Teunis Karel, 3771 MB Barneveld (NL)
(74) Vertreter: Ferguson, Alexander

(57) **Zusammenfassung**

Go-Kart oder Tretauto (1) mit Pedalen (10) und zumindest einem durch Bewegung der Pedale anzutreibenden Rad (5), wobei zwischen den Pedalen und dem anzutreibenden Rad eine Freilaufkupplung (100) angeordnet ist, welche Freilaufkupplung ein erstes, rotierend angetriebenes Kuppelbestandteil (13) und ein radial da draußen gelegenes zweites, rotierend anzutreibendes Kuppelbestandteil (14) umfaßt, und dazwischen ein Kuppelteil (19), das eine Breteinabmessung hat, größer als der radiale Abstand zwischen beiden Kuppelbestandteilen und das versetzbar ist zwischen einem freien Zustand, worin das erste und das zweite Kuppelbestandteil entlang einander rotierbar sind, und einem Kuppelzustand, worin es das erste und zweite Kuppelbestandteil für zusammengehende Rotation miteinander verbindet, wobei das Kuppelteil in dem freien Stand bezüglich des ersten und des zweiten Kuppelbestandteils frei beweglich ist, wobei die Freilaufkupplung mit zumindest einem, mit dem ersten Kuppelbestandteil rotationsfesten Anschlagmittel zum zumindest in einer Rotationsrichtung Aufhalten von dem Kupptelteil in dessen freien Zustand, versehen ist.

## Beschreibung

Die Erfindung bezieht sich auf ein Tretauto oder einen Go-Kart mit einer Freilaufkupplung. Die Erfindung bezieht sich weiter auf eine Freilaufkupplung bestimmt für ein Tretauto.

Es ist bekannt um ein Tretauto mit einer Freilaufkupplung zu versehen. Hierfür kann insbesondere auf das niederländische Patent Nr. 1005378 auf Namen von Anmelderin verwiesen werden. In einer Ausführung von der bekannten Freilaufkupplung umfaßt diese eine Kappe die rotationsfest an der Hinterachse des Tretautos befestigt ist und mit radial einwärts vorstehenden Nocken versehen ist. Das an der Hinterachse montierte hinterste Kettenrad des Treppenantriebs ist rotationsfest mit einem in zwei Richtungen wirksamen Mitführer, der innerhalb der Kappe rotierbar ist. Innerhalb der Kappe befindet sich zugleich ein exzentrisch gelagerter Ring, worauf ein Antriebsnocken befestigt ist. Bei Rotation des Ringes wird der Antriebsnocken, radial betrachtet, von einem radial innengelegenen Freilaufstand, gelegen innerhalb der Rotationsbahn der Nocken an der Kappe, und von einem radial außengelegenen Antriebsstand, worin der Antriebsnocken in die genannte Rotationsbahn greift, bewegen. Die Versetzung des Nockens zu dem Antriebsstand findet statt mittels des Mitführers. Um zu verhüten, daß in der Freilaufsituation worin die Pedale angehalten werden und der Mitführer auch stillsteht, während die Kappe weiterrotiert, der Antriebsnocken durch Reibung in Rotation mitgenommen wird und bis gegen die andere Seite des Mitführers umläuft und wieder in der Rotationsbahn der Nocken an der Kappe landet, mit Blockierung als Folge, ist eine Feder vorgesehen, die fest an dem Chassis ist und Ärme hat, wovon die Enden den Ring um- und angreifen. Die Kraft, die die Federärme auf den Ring ausüben, ist genügend um die ungewünschte Mitrotation des Ringes und damit des Antriebnockens in dem Freilaufstand zu verhüten.

Das Anordnen der Feder beansprucht einige Gewandtheit. Dies macht die bekannte Freilaufkupplung minder geeignet um als Bausatz an den Konsument anzubieten. Eine andere Beschwerde der bekannten Freilaufkupplung könnte sein, daß wo die Feder in die Kupplung reicht, ein Durchgang vorhanden ist, wodurch Schmutz in die Kappe geraten kann.

Eine Aufgabe der Erfindung ist hierin Verbesserung anzubringen. Eine weitere Aufgabe der Erfindung ist eine Freilaufkupplung zu verschaffen, die wie keine andere für Bausatz geeignet ist.

Aus einem Anspekt verschafft die Erfindung hierzu einen Go-Kart oder ein Tretauto mit Pedalen und zumindest einem durch Bewegung der Pedale anzutreibenden Rad, wobei zwischen den Pedalen und dem anzutreibenden Rad eine Freilaufkupplung angeordnet ist, welche Freilaufkupplung ein erstes, rotierend angetriebenes Kuppelbestandteil und ein radial da draußen gelegenes zweites, rotierend anzutreibendes Kuppelbestandteil umfaßt, und dazwischen ein Kuppelteil, das eine Breitenabmessung hat, größer als der radiale Abstand zwischen beiden Kuppelbestandteilen und das versetzbar ist zwischen einem freien Zustand, worin das erste und das zweite Kuppelbestandteil entlang einander rotierbar sind, und einem Kuppelstand, worin es das erste und zweite Kuppelbestandteil für zusammengehende Rotation miteinander verbindet, wobei das Kuppelteil in dem freien Stand bezüglich des ersten und des zweiten Kuppelbestandteils frei beweglich ist, wobei die Freilaufkupplung mit zumindest einem, mit dem ersten Kuppelbestandteil rotationsfesten Anschlagmittel, das nahe der Rotationsbahn des zweiten Kuppelbestandteils reicht, versehen ist.

Mittels des Anschlagmittels wird in dem Freilaufstand, wenn das erste Kuppelbestandteil angehalten wird, Bewegung des Kuppelteils in Rotationsrichtung, mit dem zweiten Kuppelbestandteil mit, entgegengetreten. Das Anschlagmittel bildet ein mit der Freilaufkupplung festes Bestandteil, das nicht außer der Kupplung zu reichen braucht. Hiermit ist die Freilaufkupplung für Aufstellung als Bausatz geeignet.

Bemerkt wird, daß aus der amerikanischen Patentschrift 2.125.763 eine Freilaufkupplung für ein Tretauto bekannt ist, wobei die durch die Pedale angetriebene Radachse in der Radnabe gelagert ist, und darin einen bezüglich des Restes der Radachse versetzten, sich erstreckenden, also exzentrischen Abschnitt bildet. In der Nabe liegt ein zylindrisches Stäbchen, das darin frei rollen kann, wenn die Pedale angehalten werden. Das Stäbchen reicht radial einwärts in die Bahn des exzentrischen Abschnitts. Wenn die Achse rotiert wird, kommt der exzentrische Abschnitt wie von selbst mit dem Stäbchen in Angriff und muß durch Reibung und durch Klemmung eine Verbindung zwischen der Achse und der Nabe zustande gebracht werden. Die Kupplung kann unregelmäßig wirken, wenn diese mehrmals hintereinander, in derselben Richtung, benutzt wird, dadurch daß das Stäbchen dann über die Achse zu der anderen Seite davon bewogen werden wird. Hierin fehlt ein Anschlagmittel gemäß der vorliegenden Anmeldung. In dem Freilaufstand wird der Benutzer die Pedale derartig halten müssen, daß der exzentrische Abschnitt oben liegt und der Abstand bis das Stäbchen so groß möglich ist. Bei hoheren Rotationsgeschwindigkeiten ist die Chance jedoch groß, daß das Stäbchen in dem Freilaufstand durch die Nabewand mitgenommen wird und gegen den exzentrischen Abschnitt blockiert.

Vorzugsweise ist das Anschlagmittel gegen die Rotationsrichtung vorwärts gekehrt. Bei vorwärts fahren ist die Rotationsgeschwindigkeit in der Regel viel größer als bei rückwärts fahren. Damit sind auch die Reibungskräfte, die in dem Freilaufstand auf dem Kuppelteil ausgeübt werden groß, und zugleich die Kräfte die bei - ungewünscht - blockieren auftreten.

Vorzugsweise ist das Anschlagmittel auf einem radialen Abstand vom ersten Kuppelbestandteil gelegen, welcher Abstand ausreichend ist für Passage vom Kuppelteil dazwischendurch. Hiermit wird eine - durch das Anschlagmittel verzögerte - Versetzung des Kuppelteils zu der anderen Seite des ersten Kuppelbestandteils ermöglicht, was Benutzung der Freilauffunktion auch bei einer Fahrt rückwärts ermöglicht.

Vorzugsweise läuft das Anschlagmittel an der in Rotationsrichtung des Anschlags abgekehrten Seite fließend konisch zu. Hierdurch wird bei nach dem Freilaufen wieder in Gang setzen des Antriebes eine Versetzung des Kuppelteils von einer eventuellen Position an dem Anschlagmittel vorbei zu dem Antriebsstand, insbesondere dem Stand vorwärts, gefördert.

Vorzugsweise läuft das Anschlagmittel mit einer konkav gekrümmten Radialinnenfläche konisch zu, vorzugsweise allmählich radial nach außen laufend bis an das zweite Kuppelbestandteil. Hiermit wird die vorgenannte zurückgehende Bewegung des Kuppelteils bei wieder in Gang setzen gefördert.

Vorzugsweise sind zumindest zwei Anschlagmittel vorgesehen, die in derselben Rotationsrichtung wirksam sind und in dieser Richtung auf Abstand voneinander gelegen sind. Falls der vorgenannte Durchgang zu der anderen Seite des ersten Kuppelbestandteils ermöglicht ist, wird hiermit auch bei sehr hohen Rotationsgeschwindigkeiten - bei einer Fahrt bergab-die vorgenannte Blockierung verhütet.

Vorzugsweise umfaßt das erste Kuppelbestandteil einen radial auswärts reichenden, in Axialrichtung platten, exzentrischen Nocken. Hiermit wird eine platte Konstruktion verschafft, die wenig Einbauraum beansprucht.

Vorzugsweise bildet das zweite Kuppelbestandteil eine radial einwärts gerichtete Kreisoberfläche, für Reibungsangriff durch das Kuppelteil. Das zweite Kuppelbestandteil kann auf vorteilhafte Weise zu einer Kappe gehören, die einfach herzustellen ist und das Innere der Freilaufkupplung abschirmt.

In einer einfachen Ausführung bildet das Kuppelteil einen kreisförmigen Körper.

In einem vorteilhaften Entwurf ist das erste Kuppelbestandteil an der angetriebenen Seite der Kupplung gelegen und ist das zweite Kuppelbestandteil an der anzutreibenden Seite der Kupplung gelegen. Die angetriebene Seite kann zum Beispiel durch die Pedale gebildet werden und die anzutreibende Seite durch das vordere Zahnrad. Alternativ kann die angetriebene Seite durch das hintere Zahnrad gebildet werden und die anzutreibende Seite durch die Hinterachse, oder beziehungsweise durch die Hinterachse und einen darauf montierten Rad.

Die Erfindung verschafft weiter eine Freilaufkupplung offenbar geeignet für einen Go-Kart gemäß der Erfindung, als Bausatz ausgeführt.

Die Erfindung wird an Hand einiger in den beigefügten Zeichnungen wiedergegebenen Beispielsausführungen erläutert werden.

Gezeigt wird in:
Figur 1 ein Tretauto worin angegeben die mögliche Stelle einer Freilaufkupplung gemäß der Erfindung;
Figur 2 eine Freilaufkupplung gemäß der Erfindung, in auseinandergenommenem Zustand;
Figur 3 eine Freilaufkupplung gemäß der Erfindung, schematisch in einem auf der Tretachse gestellten Zustand; und
Figuren 4A-I: Durchschnitte durch eine Freilaufkupplung gemäß der von Figur 2, in aufeinanderfolgenden Benutzersstadien.

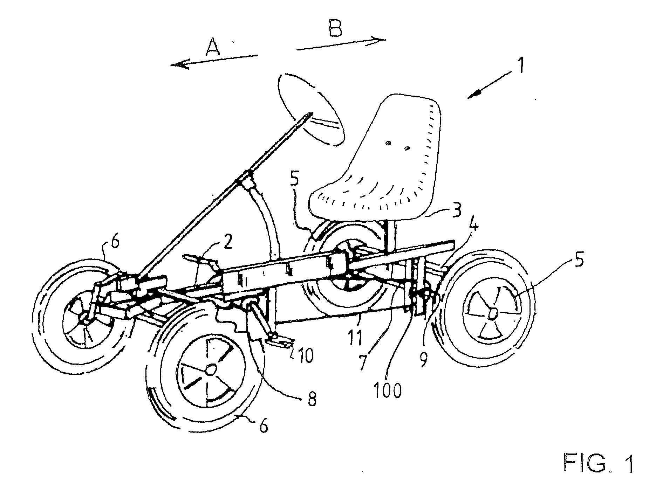

Das in Figur 1 wiedergegebene Tretauto oder der Go-Kart 1 - ohne Motor-umfaßt ein Chassis mit Hauptbalken 2, einen darauf befestigten Stuhl 3, Vorderräder 6, einen Hinterbalken 4 und Hinterräder 5, die auf den Enden von Hinter- oder Antriebsachsen 7 befestigt sind, um dadurch angetrieben zu werden. Die Antriebsachsen 7 selbst werden mit Hilfe von darauf angeordnetem Kettenrad 9 angetrieben, unter Verwendung einer Freilaufkupplung gemäß der Erfindung. Das Kettenrad 9 wird mit Hilfe von Pedalen 10, die ein vorangelegenes Kettenrad 8 antreiben und damit die darumhin laufende Kette 11, angetrieben.

Mit Hilfe der Freilaufkupplung 100 ist das Tretauto 1 nach Wahl des Benutzers in die Richtung A, vorwärts, oder in die Richtung B, rückwärts, anzutreiben, oder in eine dieser Richtungen ohne aktiven Antrieb zu fahren.

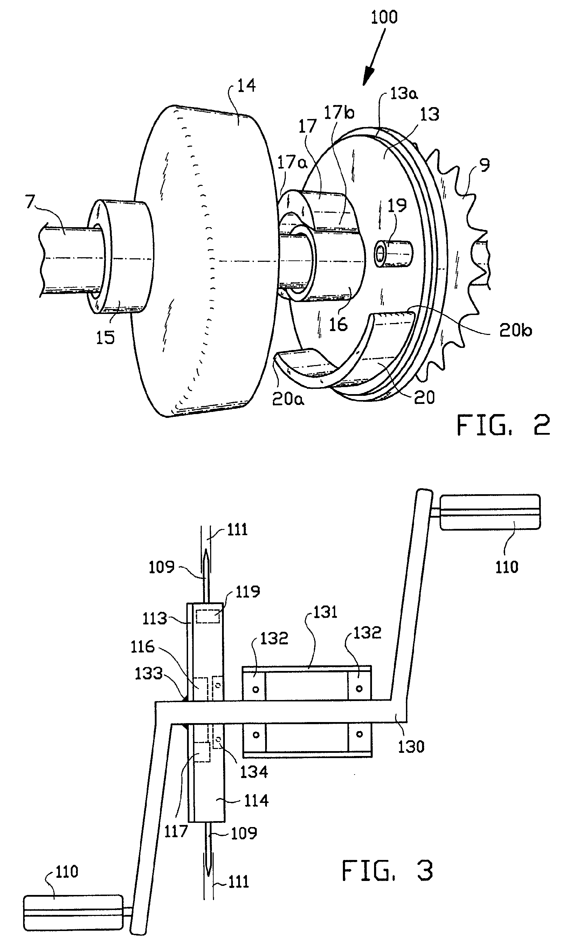

Die in Figur 2 wiedergegebene Freilaufkupplung 100 umfaßt eine Metallplatte 13, die auf nicht näher wiedergegebene Weise rotationsfest an dem Kettenrad 9 befestigt ist. Eine Hinterachse 7 reicht auf zentrierte Weise durch die Platte 13 und das Kettenrad 9. Auf nicht näher wiedergegebene Weise, zum Beispiel durch eine auf der Achse 8 geschraubte Buchse, werden die Platte 13 und das Kettenrad 9 in Axialrichtung an ihrer Stelle gehalten. Sie sind jedoch wohl im Prinzip frei rotierbar um die Achse 7.

Eine Buchse 16 ist rotationsfest mit der Platte 13 an der von dem Kettenrad 9 abgekehrten Seite befestigt, worin die Achse 7 ebenfalls frei rotieren kann. Die Buchse 16 ist an der Außenoberfläche mit einem darauf fest befestigten Nocken 17 versehen, der mit einer Nockenoberfläche 17a für Antrieb vorwärts und einer Nockenoberfläche 17b für Antrieb rückwärts versehen ist.

Ebenfalls fest auf der Platte 13 befestigt ist ein mondsichelförmiges Anschlag/Führungsteil 20, das an dem von der Rotationsrichtung 'Vorwärts' abgekehrten Ende mit einer Anschlagoberfläche 20a versehen ist und auf konkav gebogene Weise und einigermaßen zulaufend in einen dünnen Rand 20b ausläuft. Die Platte 13, das Anschlag/Führungsteil 20, die Buchse 16 und der Nocken 17 bilden ein Ganzes, das mit dem Kettenrad 9 rotierbar ist. Diese Bestandteile zusammen bilden die angetriebenen Teile der Freilaufkupplung 100.

Die anzutreibenden Teile umfassen eine Kappe 14, mit einem zylindrischen Mantel, der auf abdichtende Weise, auf dem Rand 13a und über die vorgenannten Teilen der Freilaufkaupplung 10 bis auf die Platte 13 passt. Die Kappe 14 kann eventuell auf der Platte 13 festgeklickt werden (nicht wiedergegeben). Die Kappe 14 ist an dem entgegengesetzten Außenende mit einem damit verbundenen Ring 15 versehen, womit die Kappe 14 fest auf der Achse 7 für Rotation damit befestigt ist.

Innerhalb der Beschränkung von Kappe 14 und Platte 13 befindet sich noch ein los kreiszylindrisches Ringchen 19, das als Kuppelteil benutzt wird um die tatsächliche Kupplung zwischen den Kuppelbestandteilen 17 und 14 zu erreichen.

In Figur 3 ist eine alternative Aufstellung voran einem Go-Kart angegeben. Die Tretachse 110 mit Pedalen 130 ist rotierbar innerhalb von dem fest an dem Chassis verbundenen Tretachsegehäuse 130 aufgenommen, und darin mit Lagern 132 gelagert. Die Platte 113 ist an der Tretachse 130 festgeschweißt, welche Platte mit vorgenannter Platte 13 übereinstimmt und auch mit den darauf befestigten Bestandteilen versehen ist. Die Platte 113 ist durch Schweißungen 133 fest auf der Tretachse 130 befestigt. Die Kappe 114 ist jetzt rotierbar auf der Tretachse 130 mittels Lager 134 gelagert. An der Außenoberfläche des Mantels der Kappe 114 ist das Kettenrad 109 fest befestigt, um die Kette 111 anzutreiben. Ein Unterschied mit der Aufstellung in Figur 2 ist daß jetzt das Kettenrad an der Seite der anzutreibenden Bestandteile gelegen ist und die Tretachse an der Seite der angetriebenen Bestandteile.

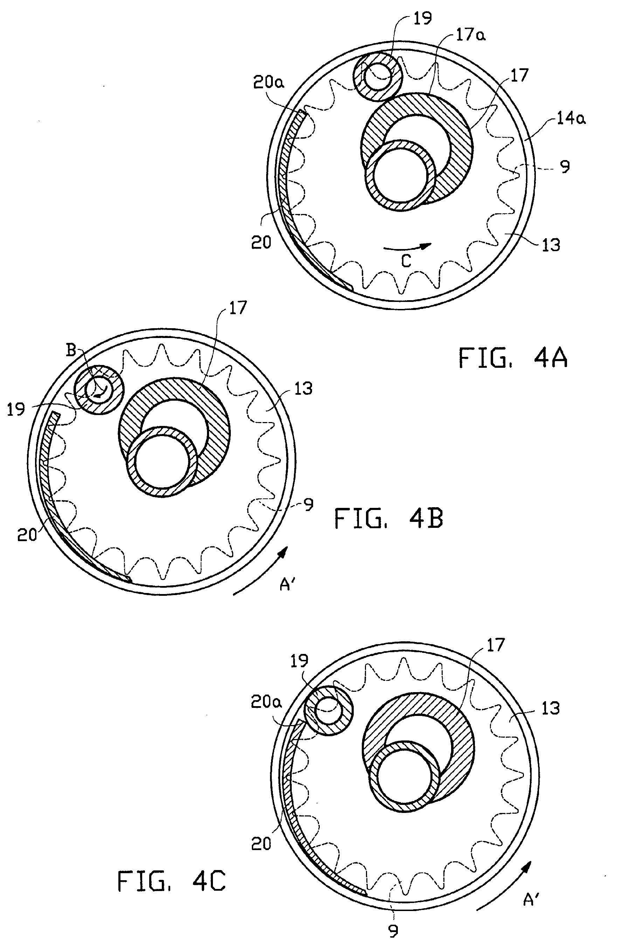

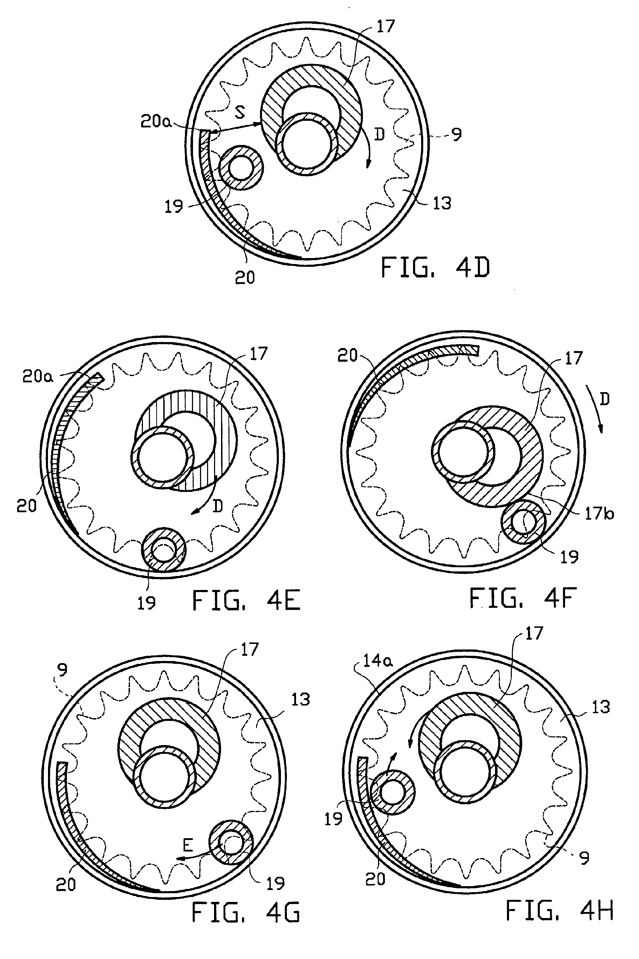

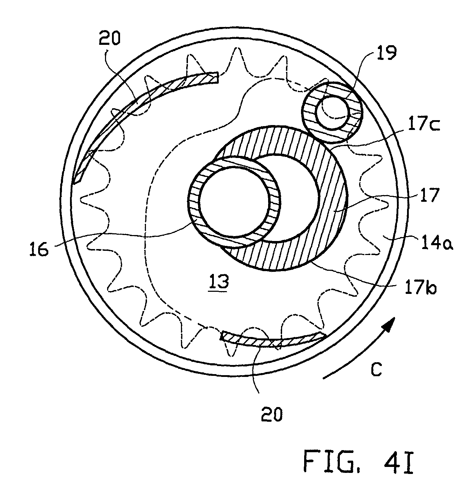

In Figur 4A ist der schematische Durchschnitt der Freilaufkupplung 100 während Betrieb wiedergegeben. In diesem Fall wird der Go-Kart vorwärts angetrieben, wobei alle wiedergegebenen Bestandteile in die Richtung C rotieren. Dadurch daß der Abstand der Oberfläche 17a des Nockens 17 bis die Innenoberfläche 14a der Kappe 14 kleiner ist als der Diameter des Ringes 19, wie auch durch gegenseitige Reibung der einander angreifenden Oberflächen, kann der Ring 19 nicht entlang den Nocken 17 passieren und wird dieser gegen die Innenoberfläche 14a des Mantels der Kappe 14 angedrückt. Die Kappe 14 wird darduch in Rotation in die Richtung C mitgenommen. Bemerkt wird, daß das Anschiag/Führungsteil 20 mit der Platte 13 und also mit dem Nocken 17 mitrotiert. Wenn der Benutzer des Go-Karts die Füße stillhält, wird die Rotation des Zahnrades 9 stoppen, und damit die Rotation der Platte 13 und der Buchse 16 und des Nockens 17. Die Kappe 14 ist jedoch rotationsfest mit den Rädern verbunden, und wird weiter in die Richtung C rotieren. Durch das Angreifen der Innenoberfläche des Mantels der Kappe 14 und des Ringes 19 wird der Ring 19 eine mitführende Kraft in die Richtung C erfahren. Im Prinzip würde dann die Chance bestehen, daß der Ring 19 ganz in der Bewegung um die Buchse 16 hin mitgenommen wird, bis gegen die andere Oberfläche 17b des Nockens 17. Dort würde der Ring 19 blockierend zwischen dem Nocken 17 und der Innenoberfläche 14a des Mantels der Kappe 14 angreifen, wodurch eine Freilaufbewegung aufgehoben werden würde und die Kupplung aufs neue realisiert sein würde, es sei denn in entgegengestellte Richtung. Eine Folge könnte sein, daß die Pedale plötzlich mitbewegen, was eine unangenehme Überraschung für den Benutzer sein könnte, und gefährlich sein kann.

Um dies zu verhüten ist das Anschlagteil 20 vorgesehen, das mit der Anschlagfläche 20a in die zu erwartende Bahn des Ringes 19 reicht. Das Anschlagteil 20 befindet sich auf einem kleinen Abstand von der Innenoberfläche 14a des Mantels 14, so daß die Rotation des Mantels nicht behindert wird und doch eine gute Anschlagfunktion erfüllt werden kann.

Dies ist in Figuren 4B und 4C wiedergegeben.

Wenn der Benutzer, nachdem er das Tretauto eine Zeit in der Freilaufsituation 'vorwärts' gehabt hat, rückwärts fahren will, wird er, nachdem er angehalten hat, die Pedale rückwärts bewegen. Dadurch werden die Platte 13 und die Buchse 16 und damit der Nocken 17 und auch das Anschlagteil 20, in die Richtung D bewegen gehen. Dies ist in Figur 4D wiedergegeben. Die Passage S zwischen dem Nocken 17 und der Anschlagfläche 20a ist weit genug um Passage des Ringes 19 zu ermöglichen. Der Ring 19 kann dadurch bei der Rotationsbewegung von unter anderem dem Nocken 17 hinterbleiben, wie in Figur 4E wiedergegeben. Endlich wird die Situation in Figur 4F wiedergegeben erreicht, worin der Ring 19 zwischen der Innenoberfläche 14a von dem Mantel der Kappe 14 und der Klemmoberfläche 17b des Nockens 17 klemmt. In diesem Fall wird der Mantel der Kappe 14 in Rotationsrichtung D mitgenommen, und damit die Achse 7. Das Tretauto wird jetzt 'rückwärts' angetrieben.

Die Geschwindigkeiten in der Richtung 'rückwärts' sind nicht so groß als die in der Richtung 'vorwärts'. Die Rotation der Kappe 14 wird dann auch nicht so schnell sein, daß eine Bewegung des Ringes 19 zu der anderen Seite des Nockens 17 befürchtet werden braucht, wenn der Benutzer die Füße stillhält.

Wenn der Benutzer des Go-Karts wieder vorwärts fahren will, wird Kupplung gefördert dadurch daß, wie in Figuren 4G und 4H wiedergegeben, der Ring 19 in seiner Versetzungsbewegung E zu der anderen Seite des Nockens 17 sozusagen in einer gekrümmten Bewegung durch das Anschlag/Führungsteil 20 geführt wird. Der Ring 19 kommt dann in dem von der Nockenoberfläche 17a und der Innenoberfläche 14a des Mantels der Kappe 14 bestimmten sozusagen keilförmigen Raum an. Dann wird der Go-Kart wieder vorwärts fahren können.

In Figur 4I ist eine alternative Ausführung der Freilaufkupplung 100 wiedergegeben, wobei jetzt zwei Anschlag/Führungsteile 20 vorgesehen sind, um auch bei sehr hohen Rotationsgeschwindigkeiten zu verhüten, daß der Ring 19 in dem Freilaufzustand 'vorwärts' doch umlaufen kann und zwischen der Nockenoberfläche 17b und der Innenoberfläche 14a der Kappe 14 klemmen kommen kann.

Wie deutlich aus den Figuren 2 und 3 zu sehen ist, bildet die Freilaufkupplung eine einfach aufzustellende Einheit, die in Lager und in montiertem Zustand wenig Raum beansprucht. In dem Fall von Figur 2 kann die Freilaufkupplung einfach auf die Achse geschoben werden und dann darauf in Axialrichtung festgelegt werden.

## Patentansprüche

1. Go-Kart oder Tretauto mit Pedalen und zumindest einem durch Bewegung der Pedale anzutreibenden Rad, wobei zwischen den Pedalen und dem anzutreibenden Rad eine Freilaufkupplung angeordnet ist, welche Freilaufkupplung ein erstes, rotierend angetriebenes Kuppelbestandteil und ein radial da draußen gelegenes zweites, rotierend anzutreibendes Kuppelbestandteil umfaßt, und dazwischen ein Kuppelteil, das eine Breitenabmessung hat, größer als der radiale Abstand zwischen beiden Kuppelbestandteilen und das versetzbar ist zwischen einem freien Zustand, worin das erste und das zweite Kuppelbestandteil entlang einander rotierbar sind, und einem Kuppelzustand, worin es das erste und zweite Kuppelbestandteil für zusammengehende Rotation miteinander verbindet, wobei das Kuppelteil in dem freien Stand bezüglich des ersten und des zweiten Kuppelbestandteils frei beweglich ist, wobei die Freilaufkupplung mit zumindest einem, mit dem ersten Kuppelbestandteil rotationsfesten Anschlagmittel, das nahe der Rotationsbahn des zweiten Kuppelbestandteils reicht, versehen ist.

2. Tretauto nach Anspruch 1, wobei das Anschlagmittel gegen die Rotationsrichtung vorwärts gekehrt ist.

3. Tretauto nach Anspruch 1 oder 2, wobei das Anschlagmittel auf einem radialen Abstand vom ersten Kuppelbestandteil gelegen ist, welcher Abstand ausreichend ist für Passage vom Kuppelteil dazwischendurch.

4. Tretauto nach Anspruch 1, 2 oder 3, wobei vorzugsweise das Anschlagmittel an der in Rotationsrichtung des Anschlags abgekehrten Seite fließend konisch zuläuft, wobei vorzugsweise das Anschlagmittel mit einer konkav gekrümmten Radialinnenfläche konisch zuläuft, vorzugsweise allmählich radial nach außen laufend bis an das zweite Kuppelbestandteil.

5. Tretauto nach einem der vorhergehenden Ansprüche, wobei zumindest zwei Anschlagmittel vorgesehen sind, die in derselben Rotationsrichtung wirksam sind und in dieser Richtung auf Abstand voneinander gelegen sind.

6. Tretauto nach einem der vorhergehenden Ansprüche, wobei das erste Kuppelbestandteil einen radial auswärts reichenden, in Axialrichtung platten exzentrischen Nocken umfaßt.

7. Tretauto nach einem der vorhergehenden Ansprüche, wobei das zweite Kuppelbestandteil eine radial einwärts gerichtete Kreisfläche bildet, für Reibungsangriff durch das Kuppelteil, wobei vorzugsweise das zweite Kuppelbestandteil zu einer Kappe gehört.

8. Tretauto nach einem der vorhergehenden Ansprüche, wobei das Kuppelteil einen kreisförmigen Körper bildet.

9. Tretauto nach einem der vorhergehenden Ansprüche, wobei das erste Kuppelbestandteil an der angetriebenen Seite der Kupplung gelegen ist und das zweite Kuppelbestandteil an der anzutreibenden Seite der Kupplung gelegen ist, wobei das Tretauto vorzugsweise mit einer vorangelegenen Tretachse und einer Hinterachse versehen ist und das erste Kuppelbestandteil ein rotationsfestes Ganzes mit einem an der Hinterachse vorgesehenen Antriebsrad, wie einem Kettenrad, bildet.

10. Freilaufkupplung, offenbar geeignet für ein Tretauto nach einem der vorhergehenden Ansprüche, als Bausatz ausgeführt.
